# EUROPEAN PATENT APPLICATION

(11) **EP 4 467 963 A1**
(43) Date of publication of application: **27.11.2024**
(21) Application number: 23382498.6
(22) Date of filing: 26.05.2023
(51) Int. Cl.: G01N 19/04, G01N 3/08

(54) **PROCESS FOR DETERMINING THE PROPAGATION OF A CRACK OR DELAMINATION OF A SPECIMEN**

(71) Applicant: Ikerlan, S. Coop., 20500 Mondragon (ES); Universitat de Girona, 17004 Girona (ES)
(72) Inventor: RENART CANALIAS, Jordi, 17004 GIRONA (ES); CARRERAS BLASCO, Laura, 17004 GIRONA (ES); TURON TRAVESA, Albert, 17004 GIRONA (ES); ZURBITU GONZALEZ, Javier, 20500 ARRASATE - MONDRAGON (ES); LECIÑANA ARREGUI, Iñaki, 20500 ARRASATE - MONDRAGON (ES)
(74) Representative: Igartua, Ismael

(57) **Abstract**

The invention relates to a process for monitoring the propagation of a crack in a specimen comprising two supporting elements joined together by means of a polymeric material (1.0). The process comprises arranging the specimen in a given position; making a crack (2) or delamination in the polymeric material (1.0) at a longitudinal end of the specimen; applying a force to the specimen; and monitoring the propagation of the crack (2) or delamination as a result of the application of the force. The force is applied to an area of said specimen (1) extending across the width of said specimen in a given direction, the specimen being arranged such that its longitudinal axis (Y) is inclined with respect to said given direction.

## Description

### TECHNICAL FIELD

The present invention relates to processes for determining the propagation of a crack or delamination of a specimen, in particular to processes used in testing.

### PRIOR ART

Tests on specimens comprising at least two supporting elements joined together by a polymeric material, using specific processes and apparatus, are known. These processes and apparatus are used to determine the strength of the joining between the two support elements provided by the polymeric material and/or the behaviour of this joining.

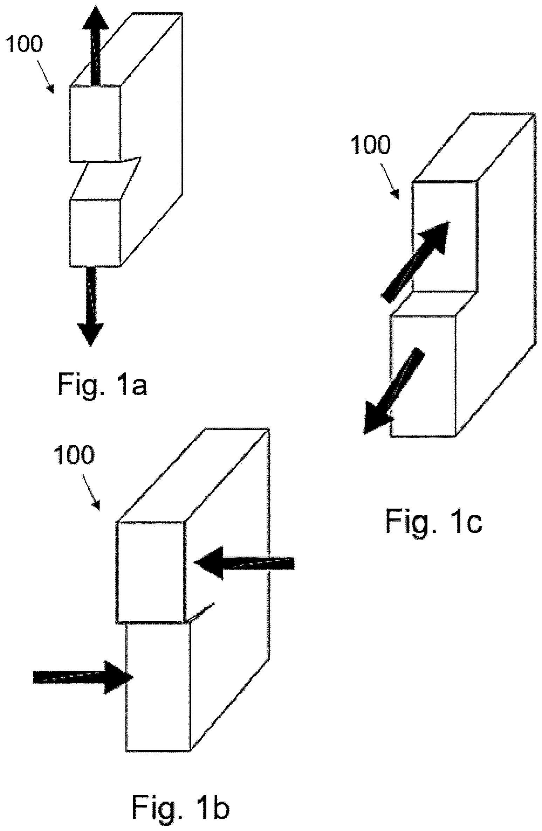

In general, any specimen can be subjected to fracture stresses in three different modes, which are represented schematically in figures 1a, 1b and 1c and defined below:
- Mode I or opening mode (Figure 1a). In this mode, a specimen 100 with a crack or delamination between the two support elements at one end is taken as a starting point, and either (a) a wedge is inserted with a longitudinal pushing force into the crack to cause deformation, in the form of an opening, of the support elements or (b) the force is applied on the first support element of the specimen and simultaneously on the second support element of the specimen and in a direction opposite to the force applied on the first support element, these forces being applied to separate the two support elements from each other.
- Mode II or sliding mode (figure 1b). In this mode, a longitudinal pushing force is exerted on one side of the specimen 100 (on one of the support elements), causing both support elements to deform in the same direction.
- Mode III or transverse rupture or tearing mode (figure 1c). In this mode, a pushing force in one transverse direction is exerted against one support element of the specimen 100 and a pushing force in the opposite transverse direction is exerted on the other support element, causing deformation of both support elements.

These modes are used to characterise the polymeric material used in the specimen, i.e. to obtain the behaviour of this polymeric material in order to predict the behaviour of the structures which, in use, will carry these adhesive materials.

WO2021152187A1 discloses a process in which a force is applied to a specimen comprising at least two longitudinal support elements joined together by an adhesive material and extending in parallel along a longitudinal axis of the specimen; two longitudinal ends opposite each other with respect to said longitudinal axis; and a crack in the polymeric material of the specimen, at a longitudinal end of said specimen.

### DISCLOSURE OF THE INVENTION

The object of the invention is to provide a process for monitoring the propagation of a crack or delamination in a specimen, as defined in the claims.

The process comprises arranging a specimen comprising at least two longitudinal support elements joined together by a polymeric material and extending in parallel along a longitudinal axis of the specimen, and two longitudinal ends opposite each other with respect to said longitudinal axis; making a crack or delamination in the polymeric material of the specimen, at a longitudinal end of said specimen; applying a force on the specimen; and monitoring the propagation of the crack or delamination as a result of the application of said force.

The force is applied to separate the two supporting elements from each other, i.e. to eliminate the action of the polymeric material. By monitoring the propagation or evolution of the crack or delamination, knowing the force that is being applied, a relationship can be established between this force and this evolution, which allows the behaviour of the polymeric material to be obtained (for example, what force is necessary to eliminate its joining effect), i.e., the polymeric material can be characterised. The characterisation of the polymeric material is used to predict the behaviour of the structures comprising the polymeric material in the final applications.

The force on the specimen is applied to an area of the specimen extending across the width of the specimen in a given direction, the specimen being arranged in such a way that the longitudinal axis of the specimen is inclined at a certain angle of inclination with respect to the given direction, i.e. not perpendicular to the given direction (and logically different from zero), taking the given direction when the application of force commences. Thus, the angle of inclination defined between the longitudinal axis and the given direction is between 90° and - 90°, and different from 90°, 0° and -90°.

When a specimen is subjected to a process for monitoring the propagation of the crack, the specimen is always arranged in such a way that its longitudinal axis is at 90° in respect of the direction in which the area of the specimen on which the force is applied expands, so that it is possible to obtain the behaviour of the polymeric material used in the specimen, as described above.

The proposed arrangement of the specimen causes the crack or delamination to expand or advance in a non-self-similar manner, so that different advances of the crack or delamination along the width of the specimen can be obtained and the propagation or advance of the crack or delamination can be known in different directions and not only in the direction of the longitudinal axis of the specimen (by changing the relative inclination between the longitudinal axis and the given direction, i.e. by changing the angle of inclination).

With this specimen arrangement, all types of crack propagation or delamination can be tested and can be adapted to different requirements by simply modifying the specimen arrangement (e.g. by varying the angle of inclination), which can be easily adapted to real conditions. Therefore, by establishing a relationship between the applied force and the propagation or monitored evolution of the crack or delamination, the behaviour of the polymeric material under different conditions can be understood to a greater extent, thus being able to test loading conditions on said specimen (and therefore on said polymeric material) that more closely resemble real conditions, compared to the processes of the prior art, In this way, the information generated by this process can not only be used to characterise the behaviour of the polymeric material, but can also be used to validate the model (such information can be compared with information obtained from simulations, for example).

In addition, the proposed process makes it possible to validate a polymeric material in a simple and fast way, since no additional processes and tools are required to validate a previously characterised polymeric material.

These and other advantages and features of the invention will become apparent in view of the figures and the detailed description of the invention.

### DESCRIPTION OF THE DRAWINGS

Figure 1a shows a specimen subjected to mode I fracture stresses, as an example.
Figure 1b shows a specimen subjected to fracture stresses in mode II, as an example.
Figure 1c shows a specimen subjected to mode III fracture stresses, as an example.
Figure 2 shows a specimen on which a force can be applied to implement the process according to the invention.
Figure 3 shows the evolution of a crack or delamination of the specimen of figure 1, during an embodiment of the process of the invention.
Figure 4 is a plan view of an actuating tool applying a force on a specimen, according to one embodiment of the process of the invention.
Figure 5 schematically shows the application of a force on the specimen, during the implementation of an embodiment of the process of the invention.
Figure 6 schematically shows the application of a force on a crack or delamination of the specimen, during the implementation of one embodiment of the process of the invention.
Figure 7 schematically shows the application of a force on the specimen, during the implementation of an embodiment of the process of the invention.
Figure 8 schematically shows the application of a force on the specimen, during the
implementation of an embodiment of the process of the invention.

Figure 9 shows the evolution of the force applied to a specimen according to one embodiment of the process of the invention.

### DETAILED DISCLOSURE OF THE INVENTION

The proposed process is a process for monitoring the propagation of a crack 2 or delamination in a specimen 1. Hereafter it will be referred to as crack 2, but it is to be interpreted that it could be a delamination.

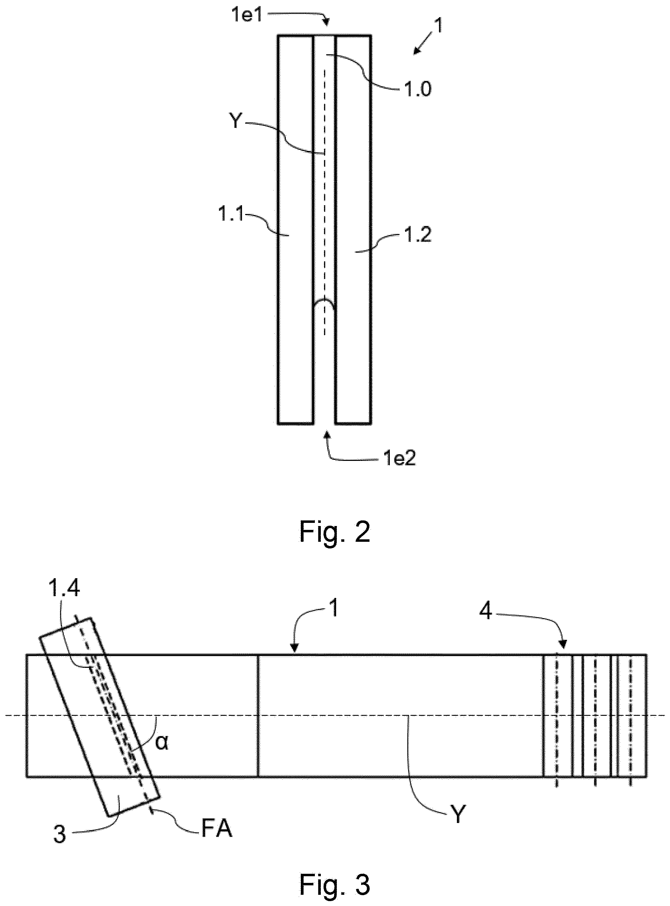

Said specimen 1 comprises two longitudinal support elements 1.1 and 1.2 extending in parallel along a longitudinal axis Y of said specimen 1, joined by a polymeric material 1.0 of said specimen 1 which is arranged between said two support elements 1.1 and 1.2; and two opposite longitudinal ends 1e1 and 1e2 with respect to said longitudinal axis Y, as represented in figure 2.

The process further comprises making a crack 2 in the polymeric material 1.0 of the specimen 1, at a longitudinal end 1e1 and 1e2 of the specimen 1 and applying force F on the specimen 1 once the specimen 1 has the crack 2. The crack 2 may be made before the specimen 1 is arranged in the determined position or once the specimen 1 is arranged in the determined position.

The process comprises applying a force F to the specimen 1 with an actuating tool 3, and for this purpose the specimen 1 is arranged in a given position. At least during the application of the force F, and with the specimen 1 arranged in the determined position, the specimen 1 is held at the longitudinal end 1e1, 1e2 opposite to that at which the crack 2 is located, by means of a clamping tool 4.

In the process, the propagation or evolution of crack 2 as a result of the application of said force F is monitored. That is to say, the crack 2 is monitored for how far it progresses, and said monitoring can be performed in real time or at set time intervals during the implementation of the process, or even only after the end of the process, as required. Any known detection method can be used to detect crack 2 propagation, such as a technique employing X-rays, employing acoustic emissions or employing the use of cameras.

To characterise the polymeric material 1.0, for example, the evolution of the crack 2 can be monitored while the process is being implemented, and the propagation or advance of the crack 2 can be determined as a function of the force F applied, which can be controlled by directly controlling the force F applied by the actuating tool 3 or by controlling the displacement of the actuating tool 3. Thus, a curve is obtained that relates said force F (or displacement) to the propagation, which corresponds to the characterisation of said polymeric material 1.0.

The force F on the specimen 1 is applied on an area 1.4 of said specimen 1 extending along the width of said specimen 1 in a given direction FA, preferably along the entire width. The specimen 1 is arranged in the determined position such that its longitudinal axis Y is inclined an angle of inclination α with respect to said determined direction FA (the longitudinal axis Y is not perpendicular to said determined direction FA). The angle of inclination α is between 90° and -90°, and different from 90°, 0° and -90°, as shown in figure 3. This allows to obtain a non-self-similar crack propagation 2, as previously described.

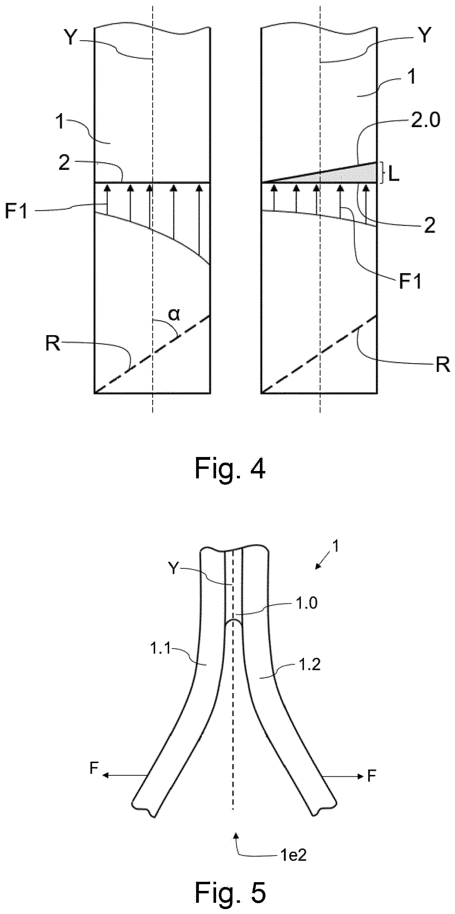

Figure 4 shows as an example the effect of the propagation of a crack 2, where the longitudinal axis Y of specimen 1 is represented, and where R represents the line of force F applied on specimen 1 (on the area 1.4 of specimen 1). The figure on the left shows crack 2 and the force F1 on crack 2 at different points, at the beginning of the application of force F, and the figure on the right shows an evolution 2.0 of the crack 2 during the process, where a non-self-similar evolution can be identified. In the figure on the right, an advance of the crack 2 of length L has been identified on one side of specimen 1.

The specimen 1 is arranged in such a way that its longitudinal axis Y and the given direction FA are in the same plane (or in parallel planes), this plane preferably being horizontal. Thus, preferably the specimen 1 is arranged in such a way that its longitudinal axis Y extends horizontally and the given direction FA is horizontal.

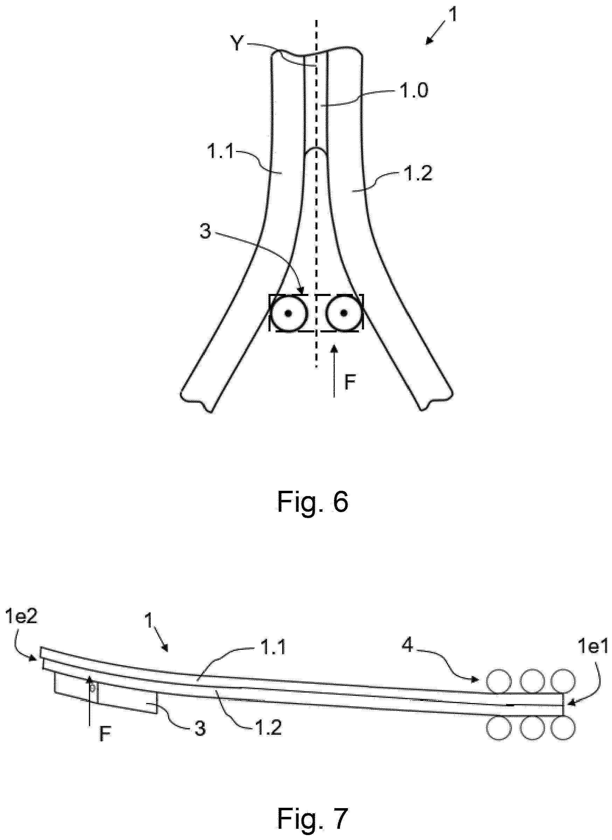

The arrangement of the specimen 1 allows the specimen 1 to be subjected to fracture stresses in the three different modes described above (mode I, mode II and mode III). For example, for mode I, preferably one of the following two options is used:
1. Force F is applied on the first support element 1.1 of the specimen 1 and simultaneously on the second support element 1.2 of the specimen 1 and in a direction opposite to the force F applied on the first support element 1.1, such forces F being applied to separate both support elements 1.1 and 1.2 from each other (see figure 5). Preferably the force F is perpendicular to the plane in which the longitudinal axis Y of the specimen 1 extends. The force F would then be applied on two areas 1.4 of the specimen 1, each area 1.4 being on a support element 1.1 and 1.2.
2. The actuating tool 3 moves between the two support elements 1.1 and 1.2 in a direction extending in the plane of the longitudinal axis Y, so that the force F is applied on the polymeric material 1.0 of the specimen 1 through the crack 2 (see figure 6). Area 1.4 would be in the polymeric material 1.0.

And for mode II, preferably one of the following two options is used:
1. The actuating tool 3 pushes the specimen 1 at the longitudinal end 1e1 comprising the crack 2, preferably in a direction perpendicular to the longitudinal axis Y, this force F being applied on the second support element 1.2 (as shown as an example in figure 7) or in the opposite direction on the first support element 1.1.
2. The actuating tool 3 is in contact with a longitudinal side of one of the support elements 1.1 and 1.2 of the specimen 1, so that the force F is applied on the side of the support element 1.1 or 1.2.

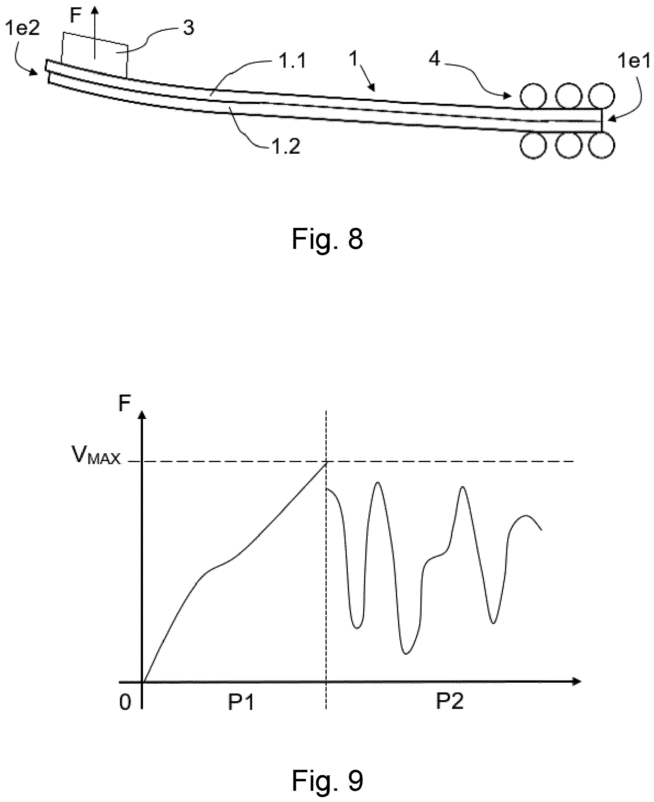

Additionally, for example, the force F could also be applied in such a way that modes I and II are combined, as shown as an example in figure 8.

The way specimen 1 is arranged also makes it possible to implement a static or fatigue process.

In the static process, the force F is applied for a predetermined time interval and, during this predetermined time interval, in a stepwise or monotonically increasing manner, from a value of zero to a predetermined maximum value V_{MAX}. In the case of increasing the force F in a stepwise manner, the increase in the value of the force F between one step and the next is preferably constant, and the duration of each step within the predetermined time interval is preferably the same. In the case of a monotonic increase of the force F, the force F curve between the minimum value (zero) and the maximum value V_{MAX} may resemble a ramp, for example, or any other desired evolution. The predetermined maximum value may depend on the application for which the polymeric material 1.0 is to be used or on the composition of the polymeric material 1.0 itself, for example.

In the fatigue process the force F is applied in a stepwise or monotonic increasing manner, from a zero value to a predetermined maximum value V_{MAX} in a first phase P1, and then, in a second phase P2, it is applied in an ascending and descending cyclic manner during a desired time interval within a range of values delimited by these 0 and maximum values V_{MAX}, as shown in the example of figure 9. This application of the cyclic force F shall be performed as required on a case-by-case or time-by-time basis.

The proposed process also allows one or more static processes to be combined with one or more fatigue processes for the same specimen 1, and in the order required. Whether and how to combine these processes will depend on the requirements for the polymeric material 1.0, but the more combinations that are made, the more information will be obtained about the polymeric material 1.0. Thus, in some simple applications it may be sufficient to use a single process or a simple combination of them, but in applications such as aeronautics, for example, it is possible to have a larger number of combined processes to validate such a polymeric material 1.0 under the highest possible loading conditions.

During the implementation of the proposed process, the relative inclination between the longitudinal axis Y and the determined direction FA (the angle of inclination α between the longitudinal axis Y of the said specimen 1 and the determined direction FA) of the area 1.4 of the specimen 1 on which the force F is applied can be modified as many times as required, in order to monitor the propagation of the crack 2 in different directions and before different conditions. For this purpose, preferably, the arrangement of the specimen 1 is modified, but alternatively the position of the actuating tool 3 or even both (actuating tool 3 and specimen 1) could be modified.

## Claims

1. Process for monitoring the propagation of a crack or delamination in a specimen, comprising arranging a specimen (1) comprising two longitudinal support elements (1.1, 1.2) extending in parallel along a longitudinal axis (Y) of the specimen (1), joined by a polymeric material (1.0) of said specimen (1) which is arranged between said two support elements (1.1, 1.2); and two longitudinal ends (1e1, 1e2) opposite with respect to said longitudinal axis (Y); making a crack (2) or delamination in the polymeric material (1.0) of the specimen (1), at a longitudinal end (1e1, 1e2) of said specimen (1); applying a force (F) on the specimen (1); and monitoring the propagation of the crack (2) or delamination as a result of the application of said force (F), **characterised in that** the force (F) on the specimen (1) is applied over an area (1.4) of said specimen (1) extending, along the width of said specimen (1), in a given direction (FA), the specimen (1) being arranged such that the longitudinal axis (Y) of the specimen (1) is inclined by a certain angle of inclination (α) with respect to said given direction (FA).

2. Process according to claim 1, wherein the specimen (1) is arranged in such a way that its longitudinal axis (Y) and the determined direction (FA) are in the same plane or in parallel planes.

3. Process according to claim 2, wherein the longitudinal axis (Y) of the specimen and the determined direction (F) are horizontal.

4. Process according to claim 2 or 3, wherein the force (F) is applied on the first support element (1.1) of the specimen (1) and simultaneously on the second support element (1.2) of the specimen (1) and in a direction opposite to the force (F) applied on the first support element (1.1), said forces (F) being applied to separate both support elements (1.1, 1.2) from each other.

5. Process according to any of claims 2 to 4, wherein the force (F) is perpendicular to the plane in which the longitudinal axis (Y) of the specimen (1) extends.

6. Process according to claim 2 or 3, wherein the force (F) is applied on a surface of one of the support elements (1.1, 1.2) which is opposite to the surface of said support element (1.1, 1.2) in contact with the polymeric material (1.0), the force (F) being applied in the direction towards the other support element (1.1, 1.2).

7. Process according to claim 2 or 3, wherein the force (F) is applied on the polymeric material (1.0) of the specimen (1) through the crack (2) or delamination, in a direction extending in the plane of the longitudinal axis (Y).

8. Process according to any one of claims 1 to 7, wherein the force (F) is applied during a predetermined time interval, and, during said predetermined time interval, in a stepwise or monotonically increasing manner from a predetermined zero value to a predetermined maximum value (V_{MAX}).

9. Process according to claim 8, wherein once the force (F) has reached the predetermined maximum value (V_{MAX}), said force (F) is applied in an up and down cyclic manner during a given time interval, within a range of values delimited by said zero value and said maximum value (V_{MAX}).

10. Process according to any one of claims 1 to 9, wherein during the implementation of the process the angle of inclination (α) between the longitudinal axis (Y) of the specimen (1) and the determined direction (FA) of the area (1.4) of the specimen (1) on which the force (F) is applied is modified, preferably by a modification of the arrangement of the specimen (1).

11. Process according to any one of claims 1 to 10, wherein the specimen (1) is held at the longitudinal end (1e1, 1e2) opposite to the end (1e1, 1e2) where the crack (2) or delamination is located.
